# EUROPÄISCHE PATENTSCHRIFT

(11) **EP 1 309 760 B1**
(45) Veröffentlichungstag und Bekanntmachung des Hinweises auf die Patenterteilung: **23.03.2005**
(21) Anmeldenummer: 01962954.2
(22) Anmeldetag: 17.08.2001
(51) Int. Cl.: E03B 7/04

(54) **SYSTEM ZUR STEUERUNG UND ÜBERWACHUNG VON SANITÄRARMATUREN**
SYSTEM FOR THE CONTROL AND MONITORING OF SANITARY APPLIANCES
SYSTEME DE COMMANDE ET DE SURVEILLANCE DE ROBINETTERIE SANITAIRE

(30) Priorität: 17.08.2000 DE 10042165
(43) Veröffentlichungstag der Anmeldung: 14.05.2003
(73) Patentinhaber: AQUA Rotter GmbH, 14974 Ludwigsfelde (DE)
(72) Erfinder: SANDT, Burkhard, 12357 Berlin (DE); ROSCHINSKY, Christian, 15859 Kehrigk (DE); RENNAU, Joachim, 12205 Berlin (DE)
(74) Vertreter: Pfenning, Meinig & Partner
(86) Internationale Anmeldenummer: PCT/EP2001/009540
(87) Internationale Veröffentlichungsnummer: WO 2002/014614

(56) Entgegenhaltungen:
- EP-A- 0 940 738
- DE-A- 19 502 214
- DE-U- 9 313 983
- DE-U- 29 923 051

## Beschreibung

Die Erfindung betrifft ein System nach dem Oberbegriff des Anspruchs 1.

Die Anmelderin hat ein System zur Sanitärsteuerung in Gebäuden entwickelt, das unter der Bezeichnung AQUA 3000 bekannt ist. Dieses System ist hierarchisch in eine Management- oder Leitebene, eine Automationsebene und eine Feldebene unterteilt.

Auf der Feldebene vollziehen sich alle für den Benutzer erforderlichen Wasserlauffunktionen mittels der geeigneten Sanitärarmaturen. Über ein 4adriges Kabel werden die busfähigen elektronischen Sanitärarmaturen in das Datenübertragungsnetzwerk für die Steuerung und Überwachung eingebunden und außerdem mit der für ihren Betrieb erforderlichen Spannung versorgt.

Auf der Automationsebene erfolgt in sogenannten Automationsstationen, die jeweils über einen Feldbus mit mehreren Sanitärarmaturen verbunden sind, das Erfassen, Überwachen, Regeln, Steuern und Optimieren aller sanitärtechnischen Wasserlauffunktionen. Spitzenlastoptimierungen, Folgesteuerungen sowie das Wartungsmanagement und Sicherheitsmaßnahmen sind hierbei die wichtigsten Aufgabenbereiche.

Auf der obersten Ebene, der Management- oder Leitebene, erfolgt das Bedienen, Beobachten, Analysieren und Protokollieren aller sanitärtechnischen Prozesse.

Dieses bekannte System erfordert, wie vorstehend erwähnt, eine 4adrige Leitungsverbindung zu jeder Sanitärarmatur, wobei zwei Adern für die Spannungsversorgung und zwei Adern für die Datenübertragung, das heißt zum Übertragen von Befehlen, Zustandsmeldungen und dergleichen benötigt werden. Hier ergibt sich jedoch das Problem, daß, insbesondere bei der Umrüstung bestehender Sanitäranlagen, Sanitärarmaturen bisher üblicherweise nicht elektrisch betrieben wurden und daher auch keinen elektrischen Leitungsanschluß besaßen. Wurde eine derartige Armatur durch eine elektrisch betriebene Armatur ersetzt, so wurde das Problem der elektrischen Versorgung dahingehend gelöst, daß die neue Armatur mit einer Batterie versehen wurde. Damit besteht jedoch noch nicht die Möglichkeit, die Armatur in ein allgemeines System zur Steuerung und Überwachung von Armaturen einzubinden. Auch bei neu zu installierenden Sanitäranlagen kann es manchmal zweckmäßig sein, auf einen leitungsgebundenen elektrischen Anschluß zu verzichten und batteriebetriebene Armaturen zu verwenden.

Es ist daher die Aufgabe der vorliegenden Erfindung, ein System zur Steuerung und Überwachung elektronischer Sanitärarmaturen mit einer Leitebene, einer Automationsebene und einer Feldebene, bei dem in der Automationsebene vorgesehene Automationsstationen über jeweils einen Feldbus mit mehreren Sanitärarmaturen verbunden sind, zu schaffen, das es ermöglicht, auch ohne einen elektrischen Leitungsanschluß versehene Sanitärarmaturen in das System einzubinden.

Diese Aufgabe wird erfindungsgemäß gelöst durch die Merkmale des Anspruchs 1. Vorteilhafte Weiterbildungen des erfindungsgemäßen Systems ergeben sich aus den Unteransprüchen.

Dadurch, daß mindestens eine über den Feldbus mit der zugeordneten Automationsstation leitungsgebunden kommunizierende Funkstation vorgesehen ist, die zumindest mit einem Teil der mehreren Sanitärarmaturen über jeweils eine drahtlose Datenübertragungsstrecke in Verbindung ist, besteht die Möglichkeit, Sanitärarmaturen zu verwenden, bei denen einerseits die Spannungsversorgung durch eine an der Armatur angebrachten Batterie sichergestellt ist und andererseits die Datenkommunikation mit der zugeordneten Automationsstation aufeinanderfolgend teilweise über den Feldbus und teilweise durch drahtlose Übermittlung stattfindet. Die Erfindung ist jedoch auch anwendbar auf solche Armaturen, denen eine elektrische Versorgungsspannung über eine 2adrige Leitung zugeführt wird, das heißt zusätzliche Leitungsadern für eine Datenübertragung nicht zur Verfügung stehen.

Die Datenkommunikation über die drahtlose Übertragungsstrecke ist vorzugsweise bidirektional, d.h. es können Befehle von der Funkstation zu der Sanitärarmatur zu deren Steuerung und Zustandsmeldungen von der Sanitärarmatur zur Funkstation übertragen werden.

Die Funkstation sollte nicht nur eine Schnittstelle zur Umwandlung der leitungsgebundenen übertragenen Signale in Funksignale und umgekehrt darstellen, sondern auch so mit den drahtlos mit-ihr verbundenen Sanitärarmaturen kommunizieren, daß der Leistungsverbrauch der batteriegespeisten Armaturen möglichst gering ist.

Die mit einer Funkstation drahtlos verbundenen Sanitärarmaturen befinden sich zweckmäßig in einem bis maximal drei einander benachbarten Sanitärräumen, die einen Abstand bis zu etwa 20 m von der Funkstation haben sollten. Die Sender in den Funkstationen und in den Sanitärarmaturen sollten eine einstellbare Reichweite haben, um diese den jeweiligen örtlichen Gegebenheiten anpassen zu können.

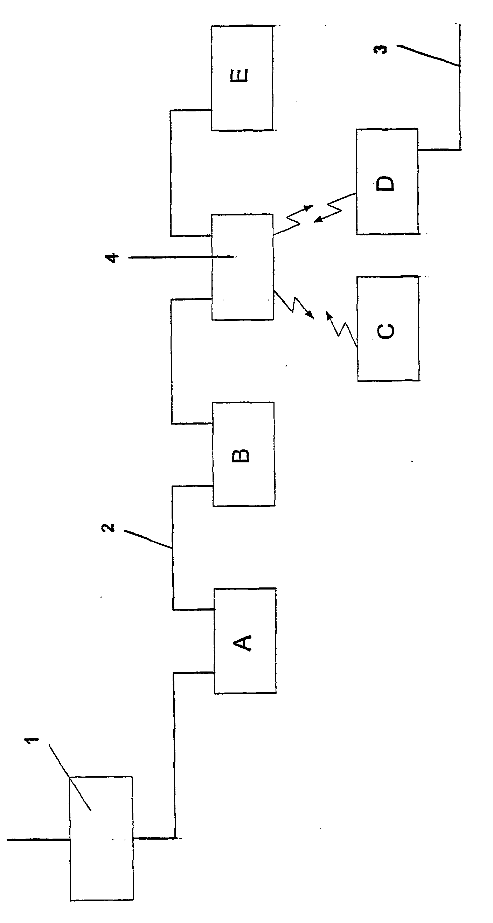

Die Erfindung wird im folgenden anhand eines in der Figur dargestellten Ausführungsbeispiels näher erläutert. Diese zeigt ein schematisches Blockschaltbild einer Automationsstation in der Automationsebene sowie der an dieser angeschlossenen Sanitärarmaturen in der Feldebene.

Die Automationsstation 1 ist Teil der Automationsebene eines Wassermanagementsystems. Die üblicherweise mehrere voneinander getrennte Automationsstationen 1 aufweisende Automationsebene ist mit einer höherrangigen, nicht dargestellten Management- oder Leitebene verbunden, welche übergeordnete Steuerungs- und Überwachungsaufgaben übernimmt, die von den einzelnen Automationsstationen 1 nicht zufriedenstellend gelöst werden können.

Die Automationsstation L dient im wesentlichen Erfassen, Überwachen, Regeln, Steuern und Optimieren der Betriebszustände der nachgeordneten Sanitärarmaturen in der Feldebene. Hierzu sind die einzelnen Sanitärarmaturen in Reihe mit einem 4adrigen Feldbus Z verbunden, der zu der Automationsstation 1 führt. Der Feldbus 2 dient sowohl zur Übertragung der Versorgungsspannung als auch zur Datenübertragung.

Im gezeigten Beispiel sind fünf mit A, B, C, D und E gekennzeichnete Sanitärarmaturen 2 an die Automationsstation 1 angeschlossen. Tatsächlich kann jedoch eine wesentlich größere Anzahl von Sanitärarmaturen mit der Automationsstation 1 verbunden sein.

Wie die Figur zeigt, sind die Sanitärarmaturen A, B und E direkt mit dem Feldbus 2 verbunden, das heißt sie werden unmittelbar über den Feldbus 2 mit ihrer Betriebsspannung versorgt und benutzen auch ausschließlich den Feldbus 2 für den bidirektionalen Datenaustausch mit der Automationsstation 1.

Die Sanitärarmaturen C und D sind nicht direkt mit dem Feldbus 2 verbunden, weil es beispielsweise aus wirtschaftlichen oder technischen Gründen unzweckmäßig wäre, eine derartige Verbindung herzustellen. Die Spannungsversorgung der Armatur C erfolgt durch eine Batterie, während die Armatur D über eine 2adrige Leitung 3 an ein Stromversorgungsnetz angeschlossen ist.

Um eine Datenkommunikation zwischen der Automationsstation 1 und den Sanitärarmaturen C und D durchführen zu können, ist in gleicher Weise wie die Armaturen A, B und E eine Funkstation 4 direkt mit dem Feldbus 2 verbunden. Die Funkstation 4 empfängt die an die Armaturen C und D adressierten Steuerbefehle über den Feldbus 2 von der Automationsstation 1 und wandelt sie in durch funkübertragbare Signale um. Die von der Antenne der Funkstation 4 gesendeten Signale werden von den Antennen der Armaturen C und D empfangen und die Armatur, an die der Befehl adressiert ist, führt diesen aus.

Umgekehrt werden Zustandsmeldungen von einer der Armaturen C oder D von deren Elektronik in durch funkübertragbare Signale aufbereitet und drahtlos zur Funkstation 4 gesendet. In dieser werden sie in Signale umgewandelt, die über den Feldbus 2 zur Automationsstation 1 übertragen werden können.

Die Kommunikation zwischen der Funkstation 4 und den angeschlossenen Armaturen, zumindest der batteriegespeisten, sollte in der Weise erfolgen, daß der Energieverbrauch der Armaturen möglichst gering ist. so ist es beispielsweise möglich, daß die Armaturen nicht ständig in einem Betriebszustand gehalten werden, in welchem sie zum Empfang von Befehlen von der Automationsstation bereit sind, sondern sie können in bestimmten Zeitabständen eine Anfrage bei der Funkstation durchführen, ob ein derartiger Befehl vorliegt. Ist dies der Fall, dann wird die Armatur in den empfangsbereiten Zustand geschaltet, so daß der Befehl zu ihr übertragen werden kann. Die Funkstation muß daher in der Lage sein, die Befehle bis zu ihrer Übertragung zur Armatur zu speichern.

Als Zustandsmeldungen können beispielsweise Störungsmeldungen, die Anzahl der Betätigungen einer Armatur, die Höhe der Batteriespannung in der Armatur C und dergleichen übertragen werden. Als Befehle können Maßnahmen zur Beseitigung einer Störung, eine Ausschaltung der Armatur bei einer nicht behebbaren Störung, Sondernutzungen wie Reinigungs- oder Desinfektionsmaßnahmen z.B. Spülungen oder thermische Desinfektion, die Einstellung von Betriebsparametern und dergleichen übertragen werden. Die gemeldete Anzahl der Betätigungen kann beispielsweise dazu verwendet werden, die Reinigungs- oder Wartungsintervalle festzulegen. Die gemeldete Höhe der Betriebsspannung dient zur Feststellung, ob eine Batterie verbraucht ist und ausgetauscht werden muß.

Das System kann so ausgebildet sein, daß alle Sanitärarmaturen drahtlos mit dem Feldbus kommunizieren. Da die Funkstationen nur für eine bestimmte Anzahl von Armaturen ausgelegt sind, beispielsweise 16, können, wenn diese Anzahl überschritten ist, mehrere Funkstationen in Reihe mit dem Feldbus verbunden sein. Auch können, wenn die Armaturen räumlich zu weit auseinander liegen, mehrere Funkstationen verwendet werden, obwohl nicht jeweils die maximal mögliche Anzahl von Armaturen angeschlossen ist.

Bei der Installierung eines derartigen Systems können Sanitärarmaturen, die dann mit einer entsprechenden Auswahlvorrichtung versehen sind, sich diejenige Funkstation, über die ihre Datenkommunikation erfolgen soll, in Abhängigkeit von der Qualität der Übertratungsstrecke zwischen der Sanitärarmatur und der jeweiligen Funkstation auswählen. Diese Auswahl kann beispielsweise durch Vergleich der Werte der elektrischen Feldstärke der von der Sanitärarmatur empfangenen, von den einzelnen Funkstationen übermittelten Signale erfolgen.

Es kann aus wirtschaftlichen oder technischen Gründen sinnvoll sein, die Datenübertragung zwischen allen oder einem Teil der Funkstationen nicht über den Feldbus, sondern ebenfalls durch. Funk durchzuführen. In diesem Fall sollte die elektrische Versorgung der betroffenen Funkstationen durch Batterien erfolgen.

Das System ist auch für eine entgeltliche Nutzung der Sanitärarmaturen verwendbar. An einer Zentrale erfolgt der Zahlvorgang, und die Zentrale übermittelt Befehle über Funk zu den einzelnen Sanitärarmaturen, durch die diese entsprechend dem gezahlten Betrag begrenzt für eine bestimmungsgemäße Nutzung freigegeben werden. Beispiele für eine derartige Nutzung sind Duschen, Waschen oder Tanken von Trinkwasser.

Der Begriff "Sanitärarmatur" bezieht sich in Verbindung mit der vorliegenden Erfindung nicht nur auf wasserleitende Armaturen, sondern allgemein auf alle steuerbaren Geräte, die in Sanitärräumen verwendet werden, z.B. elektrische Seifenspender, elektrische Warmluft-Händetrockner, elektrische Handtuchspender und dergleichen.

## Patentansprüche

1. System zur Steuerung und Überwachung elektronischer Sanitärarmaturen mit einer Leitebene, einer Automationsebene und einer Feldebene, bei dem in der Automationsebene vorgesehene Automationsstationen (1) über jeweils einen Feldbus (2) mit mehreren Sanitärarmaturen verbunden sind,
**dadurch gekennzeichnet, daß** mindestens eine über den Feldbus mit der zugeordneten Automationsstation leitungsgebunden kommunizierende Funkstation (4) vorgesehen ist, die zumindest mit einem Teil (C, D) der mehreren Sanitärarmaturen (A, B, C, D, E) über jeweils eine drahtlose Datenübertragungsstrecke in Verbindung ist.

2. System nach Anspruch 1, **dadurch gekennzeichnet, daß** die Datenkommunikation über die drahtlose Datenübertragungsstrecke bidirektional ist.

3. System nach Anspruch 1 oder 2, **dadurch gekennzeichnet, daß** jeweils eine Funkstation (4) mit den in einem bis höchstens drei benachbarten Sanitärräumen angeordneten Sanitärarmaturen drahtlos verbunden ist.

4. System nach einem der Ansprüche 1 bis 3, **dadurch gekennzeichnet, daß** zusätzlich zu den drahtlos mit den Funkstationen (4) verbundenen Sanitärarmaturen (C, D) mit dem Feldbus (2) leitungsgebunden kommunizierende Sanitärarmaturen (A, B, E) vorgesehen sind.

5. System nach einem der Ansprüche 1 bis 4, **dadurch gekennzeichnet, daß** die mit den Funkstationen (4) drahtlos verbundenen Sanitärarmaturen (C) batteriebetrieben sind.

6. System nach Anspruch 5, **dadurch gekennzeichnet, daß** die Spannungswerte der die Sanitärarmaturen (C) versorgenden Batterien gemessen und der zugeordneten Funkstation (4) über die drahtlose Datenübertragungsstrecke mitgeteilt werden.

7. System nach Anspruch 5 oder 6, **dadurch gekennzeichnet, daß** die Kommunikation zwischen den Funkstationen (4) und den batteriebetriebenen Sanitärarmaturen (C) unter möglichst geringem Energieverbrauch erfolgt.

8. System nach Anspruch 7, **dadurch gekennzeichnet, daß** die batteriebetriebenen Sanitärarmaturen (C) nur nach Vorliegen einer von einer Automationsstation (1) zu der zugeordneten Funkstation (4) gesendeten, für sie bestimmten Nachricht in den Empfangszustand schaltbar sind.

9. System nach einem der Ansprüche 1 bis 8, **dadurch gekennzeichnet, daß** mindestens eine der Sanitärarmaturen (C, D) bei Verwendung mehrerer gleichwirkender Funkstationen (4) eine Auswahlvorrichtung aufweist für die selbsttätige Auswahl derjenigen Funkstation für die drahtlose Datenkommunikation, deren Übertragungsstrecke zu der Sanitärarmatur (C, D) die besten Übertragungseigenschaften besitzt.

10. System nach Anspruch 9, **dadurch gekennzeichnet, daß** die Auswahl der Funkstation mittels eines Vergleichs der von den einzelnen Funkstationen empfangenen elektrischen Feldstärken erfolgt.

11. System nach einem der Ansprüche 1 bis 10, **dadurch gekennzeichnet, daß** bei Verwendung mehrerer Funkstationen zwischen mindestens einem Teil von diesen eine Datenkommunikation mittels Funkübertragung vorgesehen ist.

12. System nach einem der Ansprüche 1 bis 11, **dadurch gekennzeichnet, daß** die zu den Sanitärarmaturen (A, B, C, D, E) übertragenen Daten Befehle über eine begrenzte Freigabe der Sanitärarmaturen für ihren bestimmungsgemäßen Gebrauch enthalten.

13. System nach einem der Ansprüche 1 bis 12, **dadurch gekennzeichnet, daß** die zu den Sanitärarmaturen (A, B, C, D, E) übertragenen Daten Befehle über eine begrenzte Freigabe der Sanitärarmaturen für eine Sondernutzung enthalten.

## Claims

1. System for controlling and monitoring electronic sanitary appliances with a conducting level, an automating level and a field level, where automation stations (1) provided in the automating level are connected to a plurality of sanitary appliances via a respective field bus (2), **characterised in that** at least one transmitting station (4) is provided which is via the field bus conductingly linked to the associated automation station and connected to at least a part (C, D) of the plurality of sanitary appliances (A, B, C, D, E) via a wireless data transmission path.

2. System according to Claim 1, **characterised in that** the data communication via the radio data transmission path is bidirectional.

3. System according to Claim 1 or 2, **characterised in that** a respective transmitting station (4) is radio-linked to sanitary appliances arranged in between one and maximally three adjacent sanitary areas.

4. System according to one of Claims 1 to 3, **characterised in that** in addition to the sanitary appliances (C, D) which are radio-linked to the transmitting stations (4) are provided sanitary appliances (A, B, E) which are conductingly connected to the field bus (2).

5. System according to one of Claims 1 to 4, **characterised in that** the sanitary appliances (C) which are radio-linked to the transmitting stations (4) are battery operated.

6. System according to Claim 5, **characterised in that** the voltage values of the batteries which supply the sanitary appliances are measured and released to the associated transmitting station (4) via the wireless date transmission path.

7. System according to Claim 5 or 6, **characterised in that** the communication between the transmitting stations (4) and the battery-operated sanitary appliances (C) takes place with lowest possible energy consumption.

8. System according to Claim 7, **characterised in that** the battery-operated sanitary appliances (C) can be switched to receive only in the presence of a command intended for it and sent by an automation station (1) to an associated transmitting station (4).

9. System according to one of Claim 1 to 8, **characterised in that,** when a plurality of transmitting stations (4) of same effect is used, at least one of the sanitary appliances (C, D) is provided with a selector device for automatic selection of the transmitting station for wireless data communication the transmission path of which to the sanitary appliance (C, D) offers the best transmission properties.

10. System according to Claim 9, **characterised in that** selection of a transmitting station is carried out by way of comparison of field strength received from the individual transmitting stations.

11. System according to one of Claims 1 to 10, **characterised in that** with the use of a plurality of transmitting stations data communication by means of wireless transmission is provided between at least part of them.

12. System according to one of Claims 1 to 11, **characterised in that** data transmitted to the sanitary appliances (A, B, C, D, E) include commands for limited release of the sanitary appliances for their intended use.

13. System according to one of Claims 1 to 12, **characterised in that** date transmitted to the sanitary appliances (A, B, C, D, E) include commands for limited release of the sanitary appliances for special applications.

## Revendications

1. Système de commande et de surveillance de robinetteries sanitaires électroniques comportant un plan de direction, un plan d'automatisation et un plan de terrain, dans lequel les postes d'automatisation (1) prévus dans le plan d'automatisation sont reliés à plusieurs robinetteries sanitaires via un bus de terrain respectif (2),
**caractérisé en ce qu'**est prévu au moins une station radio (4) qui communique de façon guidée avec le poste d'automatisation coordonné via le bus de terrain, ladite station étant en relation au moins avec une partie (C, D) des multiples robinetteries sanitaires (A, B, C, D, E) par, respectivement, une voie de transmission de données sans fil.

2. Système selon la revendication 1, **caractérisé en ce que** 1a communication des données par le biais de la voie de transmission de données sans fil est bidirectionnelle.

3. Système selon la revendication 1 ou 2, **caractérisé en ce que** une station radio (4) est respectivement reliée sans fil aux robinetteries sanitaires disposées dans un à au plus trois espaces sanitaires voisins.

4. Système selon l'une des revendications 1 à 3, **caractérisé en ce qu'**en plus des robinetteries sanitaires (C, D) reliées aux stations radio (4) sans fil sont prévues des robinetteries sanitaires (A, B, E) communiquant de façon guidée par le bus de terrain (2).

5. Système selon l'une des revendications 1 à 4, **caractérisé en ce que** les robinetteries sanitaires (C) reliées sans fil aux stations radio (4) sont alimentées par batterie.

6. Système selon la revendication 5, **caractérisé en ce que** les valeurs de tension des batteries alimentant les robinetteries sanitaires (C) sont mesurées et communiquées à 1a station radio coordonnée (4) par les voies de transmission de données sans fil.

7. Système selon la revendication 5 ou 6, **caractérisé en ce que** la communication entre les stations radio (4) et les robinetteries sanitaires (C) alimentées par batterie se fait avec une consommation d'énergie la plus faible possible.

8. Système selon la revendication 7, **caractérisé en ce que** les robinetteries sanitaires (C) alimentées par batterie ne peuvent être commutées dans l'état de réception qu'après l'existence d'un message défini pour elles et émis depuis un poste d'automatisation (1) vers la station radio coordonnée (4).

9. Système selon l'une des revendications 1 à 8, **caractérisé en ce qu'**au moins une des robinetteries sanitaires (C, D) présente, en cas d'utilisation de plusieurs stations radio agissant de façon similaire (4), un dispositif de sélection permettant la sélection automatique, pour la communication des données sans fil, de la station radio dont la voie de transmission de données vers la robinetterie sanitaire (C, D) possède les meilleures propriétés de transmission.

10. Système selon la revendication 9, **caractérisé en ce que** la sélection de la station radio se fait au moyen d'une comparaison des intensités électriques captées par les différentes stations radio.

11. Système selon l'une des revendications 1 à 10, **caractérisé en ce qu'**en cas d'utilisation de plusieurs stations radio, on prévoit entre au moins une partie de celles-ci une communication de données au moyen d'une transmission radioélectrique.

12. Système selon l'une des revendications 1 à 11, **caractérisé en ce que** les données transmises vers les robinetteries sanitaires (A, B, C, D, E) contiennent des commandes de validation limitée des robinetteries sanitaires pour leur utilisation conforme.

13. Système selon l'une des revendications 1 à 12, **caractérisé en ce que** les données transmises aux robinetteries sanitaires (A, B, C, D, E) contiennent des commandes de validation limitée des robinetteries sanitaires pour une utilisation spéciale.
